# EUROPEAN PATENT SPECIFICATION

(11) **EP 2 737 390 B1**
(45) Date of publication and mention of the grant of the patent: **02.08.2017**
(21) Application number: 12817564.3
(22) Date of filing: 17.01.2012
(51) Int. Cl.: G06F 3/044

(54) **CAPACITIVE TOUCH PANEL AND A METHOD OF MANUFACTURING THE SAME**
KAPAZITIVER BERÜHRUNGSBILDSCHIRM UND HERSTELLUNGSVERFAHREN DAFÜR
PANNEAU TACTILE CAPACITIF ET SON PROCÉDÉ DE FABRICATION

(30) Priority: 28.07.2011 CN 201110225214
(43) Date of publication of application: 04.06.2014
(73) Proprietor: TPK Touch Solutions (Xiamen) Inc., Xiamen, Fujian 361009 (CN)
(72) Inventor: HO, Kwan sin, Miaoli County Taiwan (TW); XIE, Yanjun, Wuhan Hebei (CN); ZOU, Xiaodan, Fujian (CN)
(74) Representative: Lucke, Andreas
(86) International application number: PCT/CN2012/070465
(87) International publication number: WO 2013/013511

(56) References cited:
- EP-A2- 2 568 366
- WO-A1-2011/052335
- WO-A1-2011/065383
- CN-A- 1 687 823
- CN-A- 101 840 292
- CN-U- 201 600 673
- US-A- 4 650 288
- US-A1- 2010 007 616
- US-A1- 2010 244 655
- US-A1- 2011 050 636
- US-A1- 2011 148 780
- UMA M ANNAIYAN ET AL: "Development of a conductive photoresist with a mixture of SU-8 and HCl doped polyaniline", TENCON 2005 2005 IEEE REGION 10, IEEE, PI, 1 November 2005 (2005-11-01), pages 1-5, XP031015325, ISBN: 978-0-7803-9311-0
- JIGUET S ET AL: "Conductive SU8-silver composite photopolymer", MICRO ELECTRO MECHANICAL SYSTEMS, 2004. 17TH IEEE INTERNATIONAL CONFER ENCE ON. (MEMS) MAASTRICHT, NETHERLANDS 25-29 JAN. 2004, PISCATAWAY, NJ, USA,IEEE, US, 25 January 2004 (2004-01-25), pages 125-128, XP010767826, DOI: 10.1109/MEMS.2004.1290538 ISBN: 978-0-7803-8265-7
- NINA HAUPTMAN ET AL: "Carbon based conductive photoresist", JOURNAL OF MATERIALS SCIENCE, KLUWER ACADEMIC PUBLISHERS, BO, vol. 44, no. 17, 7 July 2009 (2009-07-07), pages 4625-4632, XP019730786, ISSN: 1573-4803, DOI: 10.1007/S10853-009-3706-2
- CALDERER ET AL: "Effects of the atmosphere on the resistance of ITO thin films", VACUUM, PERGAMON PRESS, GB, vol. 37, no. 5-6, 1 January 1987 (1987-01-01), pages 441-442, XP025704202, ISSN: 0042-207X, DOI: 10.1016/0042-207X(87)90330-7 [retrieved on 1987-01-01]
- Tarek S. El-Bawab: "Optical Switching", 31 December 2006 (2006-12-31), Springer ISBN: 978-0-387-26141-6 pages 158-158, * page 158 - page 158 *
- YINHUA ZHOU ET AL: "Direct correlation between work function of indium-tin-oxide electrodes and solar cell performance influenced by ultraviolet irradiation and air exposure", PHYSICAL CHEMISTRY CHEMICAL PHYSICS, vol. 14, no. 34, 1 January 2012 (2012-01-01), page 12014, XP055167786, ISSN: 1463-9076, DOI: 10.1039/c2cp42448g

## Description

### BACKGROUND

### Technical Field

The present disclosure relates to a capacitive touch control technology, and more particularly relates to structure of a capacitive touch panel and a method of manufacturing the same.

### Description of the Related Art

Generally, a touch panel is made by providing a sensing area over a substrate surface, wherein the sensing area senses human fingers or pen-like writing instruments so as to achieve the purpose of touch control. A transparent conductive film (for example, indium tin oxide (ITO) is usually adopted as the material for the sensing area so that the touch control function can be achieved when a user touches and presses the transparent conductive film corresponding to the screen of the display.

Based on the touch control principles, a touch panel can be classified into various types. Among them, capacitive touch panel has advantages in all aspects including transmittance, hardness, accuracy, response time, touch input life, operation temperature, and starting force and therefore has been massively adopted.

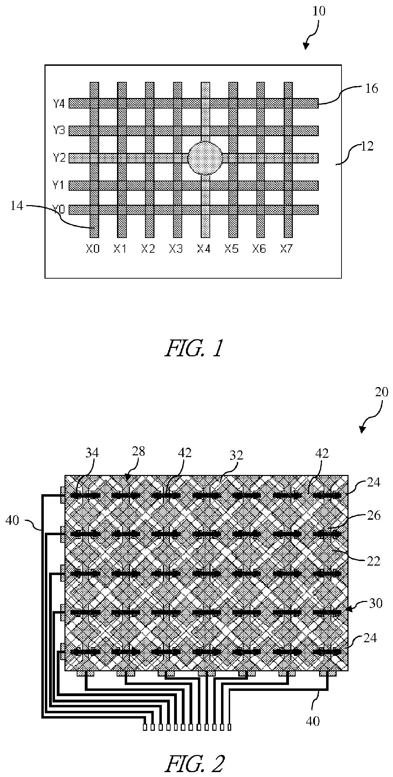

Fig. 1 is a schematic diagram showing a conventional capacitive touch panel. The capacitive touch panel 10 comprises a substrate 12, and first sensing electrodes 14 arranged in a first axial direction and second sensing electrodes 16 arranged in a second axial direction on the substrate 12. In Fig. 1, when a user touches the capacitive touch panel 10 with his finger or any other conductive article that is grounded, a touch control spot 18 is formed and a capacitive change occurs at a first sensing electrode 14 and a second sensing electrode 16 that is touched. The system (not shown) then determines location of the touch control spot 18 where the finger touches the capacitive touch panel 10 based on the location on the sensing electrodes where the capacitive change occurs.

It is important to implement the first sensing electrode 14 and the second sensing electrode 16 on the substrate 12 for the making the capacitive touch panel 10. The sensing electrodes are formed usually by covering a conductive film on the substrate 12 and then removing the unwanted areas by a photo-etching process to leave desired patterns.

In a conventional capacitive touch panel, the sensing electrodes are generally made of a metal electrode material or a transparent conductive material (such as ITO). Use of metal electrode material allows the material to be seen by naked eyes and is also liable to be oxidized due to exposure to the atmosphere. When the transparent conductive material is used, even though there is no problem of the material being seen by naked eyes, problem of oxidization still exists. Therefore, irrespective of whether the metal electrode material or the transparent conductive material is used, it is necessary to cover the sensing electrodes with a protective layer, which further increases a step of making the protective layer on the surface of the touch panel.

WO 2011/065383 A1 discloses a conductive sheet for use in a capacitive touch panel. The touch panel comprises first and second conductive patterns made by a mesh of thin metal wires having a width of a few micrometers. Parts of the conductive patterns effectively form transparent surfaces or pads, not, however, by using transparent material, but by using a mesh structure of the thin wire. According to this art, transparent electrodes are to be avoided due to their limited conductivity. In one embodiment, the thin wires are formed by thin silver traces. The silver traces may be formed by first providing a silver halide emulsion that is exposed and developed in a way which is known e.g. from black and white photography. By exposing the silver halide to light, it is converted to metallic silver, which is then subjected to a physical development treatment or plating treatment to deposit conductive metal thereon.

US 4,650,288 discloses an electrophoretic imaging display utilizing a conductive photoresist electrode. In this document, the carbon doped photoresist is used for providing a non-reflective, essentially black surface extending over the entire display.

WO 2011/052335 A1 discloses an input device comprising a substrate, a first detection electrode pattern, a second detection electrode pattern, and a first protective member. The first and second detection patterns are arranged on a surface of the substrate. The first detection electrode pattern includes first detection electrodes, first connection electrodes, and first detection lines. The second detection electrode pattern includes second detection electrodes, second connection electrodes, and second detection lines. The protective member is made of a material such as PET, acryl, polycarbonate, or glass, and has the function of preventing an external conductor such as a finger from coming in direct contact with a surface of the substrate. The first and second connection electrodes respectively have the function of electrically connecting the neighboring first and second detection electrodes.

US 2010/007617 discloses an organic light emitting display device having an electrostatic capacitive type touch panel function. The device comprises an encapsulation substrate on which a first pattern layer including a plurality of first direction pattern units arranged in parallel rows along an X direction and a plurality of second direction pattern units arranged in parallel columns along a Y direction is formed. Each row of first direction pattern units includes a plurality of main bodies and a plurality of connecting units connecting adjacent main bodies. Each column of second direction pattern units includes a plurality of main bodies. Adjacent main bodies of the second direction pattern units are connected to each other by a second pattern layer formed on a first insulating layer which is provided on top of the first and second direction pattern units, wherein the second pattern layer and the main bodies of the second direction pattern units are electrically connected via contact holes formed in said first insulating layer. The first and second pattern layers may be formed from suitable transparent materials such as ITO, IZO, ZnO, and/or In2O3.

US 2010/244655 A1 discloses transparent electrodes formed by a conductive layer including photopolymerizable resin having dispersed carbon nanotubes, which is transparent, which exhibits high electrical conductivity and facilitates the formation of an electrode pattern.

### SUMMARY

The present invention provides a structure of a capacitive touch panel and its manufacturing method as claimed in claims 1 and 5, respectively. Preferred embodiments are defined in the dependent claims. In the capacitive touch panel, a sensing electrode comprises conductive units and first and second conductive wires connecting the conductive units, further wherein the second conductive wires are made of a photosensitive material having an electrically conductive property. As the photosensitive material with an electrically conductive property has photosensitive property as well as electrically conductive property at the same time, the conductive wires are not liable to be seen by naked eyes and at the same time provide good electrical connection so that whole appearance of the touch panel can be coordinated. Also, as the photosensitive material having an electrically conductive property is chemically stable, the problem of its being oxidized when exposed to the atmosphere can be improved, and therefore the step of making a protective layer on the surface of the touch panel can be omitted.

The present disclosure provides a structure of a capacitive touch panel comprising: sensing electrodes having a plurality of conductive units and a plurality of conductive wires for connecting the conductive units, characterized in that the conductive wires are made of a photosensitive material having an electrically conductive property.

According to the present disclosure, structure of a capacitive touch panel is characterized in that the photosensitive material having an electrically conductive property is a photosensitive material doped with metal particles.

According to the present disclosure, structure of the capacitive touch panel is characterized in that the metal particles are one or more of gold, silver, copper, iron or aluminum, and any combinations thereof.

According to the present disclosure, structure of the capacitive touch panel is characterized in that the photosensitive material having an electrically conductive property is a photosensitive material doped with carbon particles.

According to the present disclosure, structure of the capacitive touch panel is characterized in that the sensing electrodes include first sensing electrodes arranged in a first axial direction and second sensing electrodes arranged in a second axial direction, and an insulating layer is disposed between the first sensing electrodes and the second sensing electrodes.

According to the present disclosure, structure of the capacitive touch panel is characterized in that each of the first sensing electrodes includes a plurality of first conductive units and a plurality of first conductive wires connecting the first conductive units, and each of the second sensing electrodes includes a plurality of second conductive units and a plurality of second conductive wires connecting the second conductive units.

According to the present disclosure, structure of the capacitive touch panel is characterized in that the insulating layer is an insulating film having a plurality of openings, wherein the first conductive units, the second conductive units, and the first conductive wires are provided on backside of the insulating film, with the openings of the insulating film aligned with the second conductive units, further wherein the second conductive wires are provided on front side of the insulating film and pass through the openings to connect the second conductive units.

According to an example, which does not form an embodiment of the present invention, the structure of the capacitive touch panel is characterized in that the insulating layer includes a plurality of insulating blocks, each of which is disposed between the first conductive wires and the second conductive wires.

According to the present disclosure, structure of the capacitive touch panel is characterized in that the sensing electrodes are connected to peripheral circuits.

According to the present disclosure, structure of the capacitive touch panel is characterized in that the peripheral circuits and the conductive wires are made of same photosensitive material having an electrically conductive property.

According to the present disclosure, structure of the capacitive touch panel is characterized in that the first conductive units, the second conductive units, and the first conductive wires are made of a transparent conductive material.

According to the present disclosure, structure of the capacitive touch panel is characterized in that the insulating layer is made of a transparent insulating material.

The present disclosure provides a method of manufacturing a capacitive touch panel, comprising the following steps:
disposing a plurality of conductive units on a substrate; and
disposing a plurality of conductive wires, which connect the conductive units to form sensing electrodes, wherein the conductive wires are made of a photosensitive material having an electrically conductive property.

According to the present disclosure, the method of manufacturing a capacitive touch panel is characterized in that the photosensitive material having an electrically conductive property is a photosensitive material doped with metal particles.

According to the present disclosure, the method of manufacturing a capacitive touch panel is characterized in that the metal particles include one or more of gold, silver, copper, iron or aluminum, and any combinations thereof.

According to the present disclosure, the method of manufacturing a capacitive touch panel is characterized in that the photosensitive material having an electrically conductive property is a photosensitive material doped with carbon particles.

According to the present disclosure, the method of manufacturing a capacitive touch panel is characterized in that the sensing electrodes include first sensing electrodes arranged in a first axial direction and second sensing electrodes arranged in a second axial direction; the method further comprises a step of disposing an insulating layer between the first sensing electrodes and the second sensing electrodes.

According to the present disclosure, the method of manufacturing a capacitive touch panel is characterized in that each of the first sensing electrodes includes a plurality of first conductive units; each of the second sensing electrodes includes a plurality of second conductive units; the conductive wires include a plurality of first conductive wires connecting the first conductive units and a plurality of second conductive wires connecting the second conductive units.

According to the present disclosure, the method of manufacturing a capacitive touch panel is characterized in that the method further comprises the following steps:
simultaneously disposing first conductive units, second conductive units, and first conductive wires on a substrate;
disposing an insulating film having a plurality of openings on surfaces of the first conductive units, the second conductive units, and the first conductive wires, so that the openings are aligned with the second conductive units; and
disposing second conductive wires on surface of the insulating film.

According to an illustrative example, which is not an embodiment of the present invention, the method of manufacturing a capacitive touch panel is characterized in that the method further comprises the following the steps:
simultaneously disposing first conductive units, second conductive units, and first conductive wires on a substrate;
disposing an insulating block on each surface of the first conductive wire; and
disposing second conductive wires on the surfaces of the insulating blocks.

According to the present disclosure, the method of manufacturing a capacitive touch panel is characterized in that the method further comprises the step of disposing peripheral circuits, which are connected with the sensing electrodes.

According to the present disclosure, the method of manufacturing a capacitive touch panel is characterized in that the step of disposing peripheral circuits and the step of disposing a plurality of conductive wires are conducted simultaneously.

### BRIEF DESCRIPTION OF THE DRAWINGS

Fig. 1 is a schematic diagram showing a conventional capacitive touch panel.
Fig. 2 is a schematic diagram showing structure of the capacitive touch panel according to a first embodiment of the present disclosure.
Fig. 3 is a schematic diagram showing the first step of making the capacitive touch panel according to the first embodiment of the present disclosure.
Fig. 4 is a schematic diagram showing the second step of making the capacitive touch panel according to the first embodiment of the present disclosure.
Fig. 5 is a partially enlarged diagram of the capacitive touch panel according to the first embodiment of the present disclosure after the second step is completed.
Fig. 6 is a schematic diagram showing structure of the capacitive touch panel according to an illustrative example, which is not an embodiment of the present invention.
Fig. 7 is a schematic diagram showing the first step of making the capacitive touch panel according to the illustrative example.
Fig. 8 is a schematic diagram showing the second step of making the capacitive touch panel according to the illustrative example.

### DETAILED DESCRIPTION OF PREFERRED EMBODIMENTS

Preferred embodiments of the present invention are described below with reference to the drawings.

Fig. 2 is a schematic diagram showing structure of a capacitive touch panel according to a first embodiment of the disclosure. In Fig. 2, the capacitive touch panel 20 comprises of sensing electrodes, an insulating film 32, and peripheral circuits 40.

In an embodiment, the sensing electrodes include first sensing electrodes 28 arranged in a first axial direction and second sensing electrodes 30 arranged in a second axial direction. The first sensing electrodes 28 comprise a plurality of first conductive units 22 and a plurality of first conductive wires 26 connecting the first conductive units 22. The second sensing electrodes 30 comprise a plurality of second conductive units 24 and a plurality of second conductive wires 42 connecting the second conductive units 24.

In another embodiment, peripheral circuits 40 are connected with the first sensing electrodes 28 and the second sensing electrodes 30 such that the capacitive change produced through the first sensing electrodes 28 and the second sensing electrodes 30 due to touching can be transmitted to a control circuit (not shown) by the peripheral circuits 40.

In another embodiment, the first conductive units 22, the second conductive units 24, and the first conductive wires 26 are made of a transparent conductive material. The peripheral circuits 40 and the second conductive wires 42, on the other hand, are made of a photosensitive material having an electrically conductive property. The photosensitive material having an electrically conductive property is a photosensitive material doped with metal particles and/or carbon particles, where the metal particles include gold, silver, copper, iron or aluminum, and any combinations thereof.

Common photosensitive materials (also commonly referred to as photo-resists) are not electrically conductive. According to this embodiment, the photosensitive material having an electrically conductive property is obtained by doping a conventional photosensitive material with electrically conductive metal particles including gold, silver, copper, iron or aluminum, or doping with electrically conductive carbon particles, or any combinations thereof to render the electrically conductive property. Also, as a photosensitive material itself is photosensitive and highly chemically stable, an electrically conductive photosensitive material can be in possession of the electrically conductive property, photosensitivity, and high chemical stability at the same time. When conductive wires or peripheral circuits are made of electrically conductive photosensitive material, a good electrical connection to conductive units can be established to form sensing electrodes. Also, as discussed above, because an additional protective layer is not desired, the problem of conductive wires being liable for oxidation due to exposure to atmosphere can also be solved through the proposed conductive wires.

Furthermore, because a photosensitive material has small thickness, when the photosensitive material having an electrically conductive property is used for making conductive wires or peripheral circuits, the photosensitive material has sheet resistance by means of the aforementioned doping. Sheet resistance is also commonly referred to as surface resistance or film resistance when applied to measurement of films. Sheet resistance has a property of having same measured values irrespective of the size of square. In other words, irrespective of whether the side length is 1 m or 0.1 m, value of sheet resistance is the same. In an embodiment, value of sheet resistance depends on thickness of the photosensitive material having the sheet resistance. Therefore, using a photosensitive material having an electrically conductive property and sheet resistance to make conductive wires or peripheral circuits of a capacitive touch panel as disclosed in the present disclose renders the wires a good electrically conductive property, and also the influences caused by uneven thickness of the conductive wires or peripheral circuits are avoided.

In an embodiment, an insulating film 32 can be used as an insulating layer (represented by cross oblique lines in Fig. 2 to demonstrate that the first sensing electrodes 28 and the second sensing electrodes 30 are covered with the insulating film 32), which is disposed on the first sensing electrodes 28 and the second sensing electrodes 30 and has a plurality of openings 34. Namely, the first conductive units 22, the second conductive units 24, and the first conductive wires 26 are provided on backside of the insulating film 32, with openings 34 of the insulating film 32 aligned with the second conductive units 24. The second conductive wires 42, on the other hand, are provided on front side of the insulating film 32 and pass through the openings 34 to connect the second conductive units 24. The insulating film 32 is made of a transparent insulating material.

A process of manufacturing a capacitive touch panel 20 of the first embodiment is described below with reference to drawings.

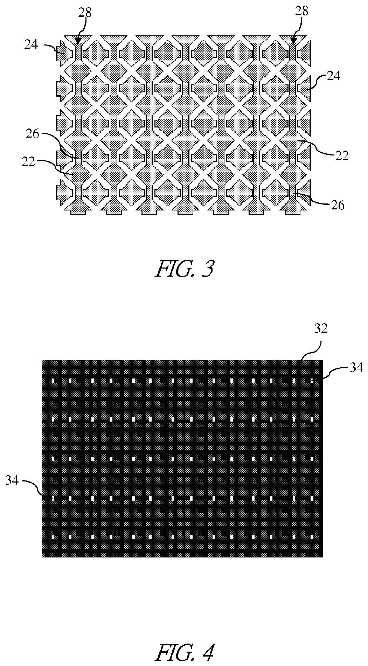

Fig. 3 is a schematic diagram illustrating the first step of making a capacitive touch panel according to the first embodiment of the present disclosure. The first step includes forming on a substrate,(not shown) first conductive units 22 in a first axial direction and second conductive units 24 in a second axial direction, and forming first conductive wires 26 to electrically connect the first conductive units 22 with each other to form a first electrode 28.

Fig. 4 is a schematic diagram illustrating the second step of making the capacitive touch panel according to the first embodiment of the present disclosure. The second step includes etching an insulating film 32 to form a plurality of openings 34 and using the insulating film 32 as an insulating layer to cover the first conductive units 22, the second conductive units 24, and the first conductive wires 26 shown in Fig. 3, wherein the openings 34 of the insulating film 32 are located at the second conductive units 24.

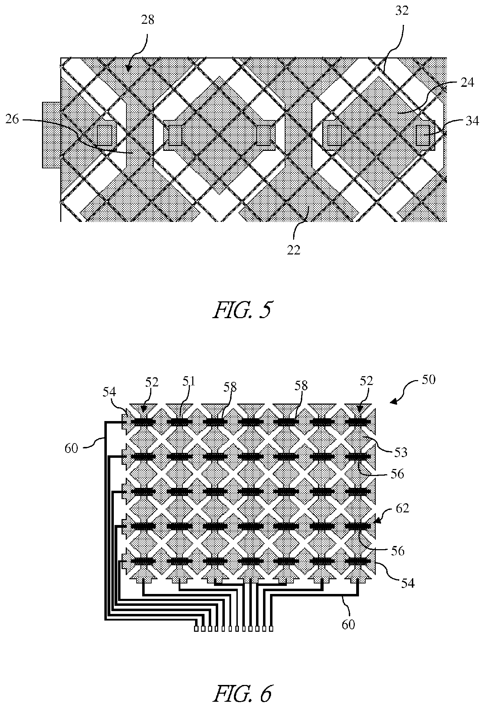

Fig. 5 is a partially enlarged diagram of the capacitive touch panel according to the first embodiment of the present invention after the second step is completed. As the insulating film 32 (represented by cross oblique lines in Fig. 5 to show that the first sensing electrodes 28 and the second sensing electrodes 30 are covered with the insulating film 32) covers most of the sensing electrodes (the first conductive units 22, the first conductive wires 26, and the second conductive units 24, expect for the second conductive units 24 exposed through the openings 34 of the insulating film 32), it can protect the sensing electrodes.

The third step includes using the second conductive wires 42 to electrically connect each of the second conductive units 24 at the openings 34 of the insulating film 32 such that the second conductive units 24 are connected with each other by the second conductive wires 42 to form the second electrodes 30. Also, each peripheral circuit 40 disposed on the substrate (not shown) is electrically connected with the first sensing electrodes 28 and the second sensing electrodes 30. After the aforementioned three steps are completed, structure of capacitive touch panel 20 as shown in Fig. 2 can be obtained.

Therefore, after the aforementioned three steps of making the peripheral circuits 40 and making the second conductive wires 42 with photosensitive material having an electrically conductive property are completed, the conductive wires of the capacitive touch panel 20 of this embodiment would not be easily seen by naked eyes while providing a good electrical connection due to the aforementioned properties of the photosensitive material and therefore the whole appearance of the touch panel can be coordinated. Also, the problem of the second conductive wires 42 and the peripheral circuits 40 being oxidized when exposed to the atmosphere would be substantially improved due to their good chemical stability. Therefore, the step of making a protective layer on the surface of the touch panel can be omitted.

Fig. 6 is a schematic diagram showing structure of a capacitive touch panel according to an illustrative example, which does not form an embodiment of the present invention. In Fig. 6, difference in structure of the capacitive touch panel 50 of the illustrative example from the structure of the capacitive touch panel 20 of the first embodiment is that the capacitive touch panel 50 of the illustrative example does not have an insulating film 32, which was present in the capacitive touch panel 20 of the first embodiment. In the capacitive touch panel 50 of the illustrative example, each insulating block 56 acts as an insulating layer that is disposed between the first conductive wires 51 and the second conductive wires 58.

Structure of the capacitive touch panel 50 of the illustrative example is similar to structure of the capacitive touch panel 20 of the first embodiment and therefore description of the same is omitted herein and will be given later.

Process of manufacturing a capacitive touch panel 50 of the illustrative example is described below with reference to the drawings.

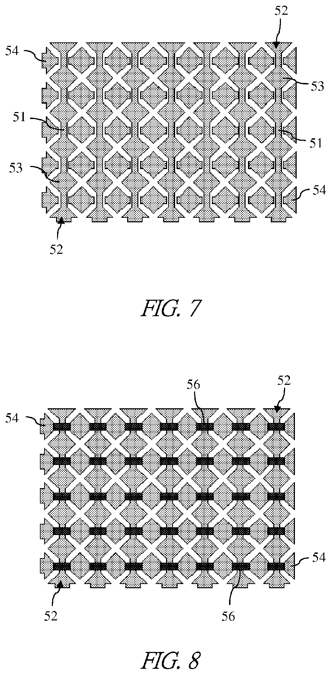

Fig. 7 is a schematic diagram illustrating the first step of making a capacitive touch panel according to the illustrative example. The first step includes forming on a substrate (not shown), first conductive units 53 in a first axial direction and second conductive units 54 in a second axial direction, and electrically connecting the adjacent first conductive units 53 with each other through first conductive wires 51 in the first axial direction to form first electrodes 52.

Fig. 8 is a schematic diagram illustrating the second step of making the capacitive touch panel according to the illustrative example. The second step includes forming insulating blocks 56 at each of the first conductive wires 51.

The third step includes electrically connecting adjacent second conductive units 54 through second conductive wires 58 at each insulating block 56 and using the insulating block 56 to insulate the second conductive wires 58 from the first electrodes 52, so that the electrically connected second conductive units 54 and second conductive wires 58 form the second electrode 62. Also, each peripheral circuit 60 disposed on the substrate (not shown) is electrically connected with the first sensing electrodes 52 and the second sensing electrodes 62. Capacitive change produced on the first sensing electrodes 52 and the second sensing electrodes 62 due to touching can be transmitted to a control circuit (not shown) by the peripheral circuits 60. After the aforementioned three steps are completed, structure of the capacitive touch panel 50 as shown in Fig. 6 can be obtained.

In the illustrative example, a plurality of peripheral circuits 60 and second conductive wires 58 are made of a photosensitive material having an electrically conductive property, and therefore the peripheral circuits 60 and second conductive wires 58 also have the advantages of the first embodiment.

The first conductive units, the second conductive units, and the first conductive wires in the capacitive touch panel of each aforementioned embodiment can be made of a transparent conductive material such as indium tin oxide (ITO), and the insulating film or insulating blocks of the insulating layer can be made of a transparent insulating material. Each of the aforementioned components can be made by a conventional photo-etching method or printing method.

Advantage of the present disclosure is to provide structure of a capacitive touch panel, in which the conductive wires and peripheral circuits are made of a photosensitive material having an electrically conductive property. As the photosensitive material has the photosensitive property and the electrically conductive property at the same time, the conductive wires are not liable to be seen by naked eyes while providing a good electrical connection, so that the whole appearance of the touch panel can be coordinated. Also, as the photosensitive material is highly chemically stable, the problem of its being oxidized after exposure to the atmosphere over a long time can be improved. Therefore, the step of making a protective layer on the surface of the touch panel can be omitted.

While the present invention has been described above with reference to the preferred embodiment and illustrative drawings, it should not be considered as limited thereby. Various equivalent alterations, omissions and modifications made to its configuration and the embodiments by the skilled persons could be conceived of without departing from the scope of the present invention.

## Claims

1. A capacitive touch panel (20), comprising:
sensing electrodes (28, 30) comprising a plurality of conductive units (22, 24) and a plurality of conductive wires (26 ,42) for connecting the conductive units (22, 24),
wherein the sensing electrodes include first sensing electrodes (28) arranged in a first axial direction and second sensing electrodes (30) arranged in a second axial direction,
wherein each of the first sensing electrodes (28) comprises a plurality of first conductive units (22) and a plurality of first conductive wires (26) connecting the first conductive units (22), and each of the second sensing electrodes (30) comprises a plurality of second conductive units (24) and a plurality of second conductive wires (42) connecting the second conductive units (24),
wherein the first conductive units (22), the second conductive units (24), and the first conductive wires (26) are provided on a backside of an insulating film (32) with a plurality of openings (34) aligned with the second conductive units (24), further wherein the second conductive wires (42) are provided on a front side of the insulating film (32) and pass through the plurality of openings (34) to connect the second conductive units (24),
wherein the first conductive units (22), the second conductive units (24), and the first conductive wires (26) are made of a transparent conductive material, in particular ITO, and the second conductive wires (42) are made of a photosensitive material having an electrically conductive property, wherein the photosensitive material is chemically more stable against oxidization when exposed to the atmosphere than the transparent conductive material,
wherein the photosensitive material having the electrically conductive property is a photoresist doped with metal particles or carbon particles.

2. The capacitive touch panel (20) according to claim 1, wherein the metal particles comprise of one or more of gold, silver, copper, iron or aluminum, and any combinations thereof.

3. The capacitive touch panel (20, 50) of claim 1 or 2, wherein the insulating layer (32) is made of transparent insulating material.

4. The capacitive touch panel (20) according to claim 1, wherein the sensing electrodes (28, 30) are connected to peripheral circuits (40),
wherein the peripheral circuits (40) are made of the photosensitive material having an electrically conductive property, said peripheral circuits (40) configured for transmitting a capacitive change produced through the first sensing electrodes (28) and the second sensing electrodes (30) due to touching to a control circuit.

5. A method of manufacturing a capacitive touch panel (20), comprising the following steps:
simultaneously disposing first conductive units (22), second conductive units (24), and first conductive wires (26) on a substrate;
wherein said first and second conductive units (22, 24) and said first conductive wires (26) are made from a transparent conductive material, in particular ITO, and wherein said first conductive wires (26) connect the first conductive units (22) to form first sensing electrodes (28) arranged in a first axial direction,
disposing an insulating film (32) having a plurality of openings (34) on surfaces of the first conductive units (22), the second conductive units (24), and the first conductive wires (26) such that the openings (34) are aligned with the second conductive units (24); and
disposing second conductive wires (42) on the surface of the insulating film (32), said second conductive wires (42) connecting said second conductive units (24) to form second sensing electrodes (30) arranged in a second axial direction,
wherein the second conductive wires (42) are made of a photosensitive material having an electrically conductive property, wherein the photosensitive material is chemically more stable against oxidization when exposed to the atmosphere than the transparent conductive material,
wherein the photosensitive material having an electrically conductive property is a photoresist doped with metal particles or carbon particles.

6. The method of claim 5, wherein the metal particles comprise of one or more of gold, silver, copper, iron or aluminum, and any combinations thereof.

7. The method of manufacturing a capacitive touch panel (20) according to claim 5, further comprising the step of disposing peripheral circuits (40) connected with the sensing electrodes (28, 30), said peripheral circuits (40) configured for transmitting a capacitive change produced through the first sensing electrodes (28) and the second sensing electrodes (30) due to touching to a control circuit, wherein said peripheral circuits are made of said photosensitive material having an electrically conductive property,
wherein the step of disposing the peripheral circuits (40) and the step of conductive wires (42) are conducted simultaneously.

## Patentansprüche

1. Kapazitives Touchpanel (20), das Folgendes umfasst:
Erfassungselektroden (28, 30), die eine Mehrzahl von leitenden Einheiten (22, 24) und eine Mehrzahl von leitenden Drähten (26, 42) zum Verbinden der leitfähigen Einheiten (22, 24) umfasst,
wobei die Erfassungselektroden erste Erfassungselektroden (28) umfassen, die in einer ersten axialen Richtung angeordnet sind, und zweite Erfassungselektroden (30) umfassen, die in einer zweiten axialen Richtung angeordnet sind,
wobei eine jede der ersten Erfassungselektroden (28) eine Mehrzahl von ersten leitfähigen Einheiten (22) und eine Mehrzahl von ersten leitfähigen Drähten (26) umfasst, die die ersten leitfähigen Einheiten (22) verbinden, und wobei eine jede der zweiten Erfassungselektroden (30) eine Mehrzahl von zweiten leitfähigen Einheiten (24) und eine Mehrzahl von zweiten leitfähigen Drähten (42) umfasst, die die zweiten leitfähgien Einheiten (24) verbinden,
wobei die ersten leitfähigen Einheiten (22), die zweiten leitfähigen Einheiten (24), und die ersten leitfähigen Drähte (26) auf einer Rückseite eines isolierenden Films (32) angeordnet sind, wobei der isolierende Film (32) eine Mehrzahl von Öffnungen (34) hat, die mit den zweiten leitfähigen Einheiten (24) ausgerichtet sind, wobei die zweiten leitfähigen Drähte (42) auf einer Vorderseite des isolierenden Films (32) angeordnet sind und sich durch die Mehrzahl von Öffnungen (34) erstrecken, um die zweiten leitfähigen Einheiten (24) zu verbinden,
wobei die ersten leitfähigen Einheiten (22), die zweiten leitfähigen Einheiten (24) und die ersten leitfähigen Drähte (26) aus einem transparenten leitfähigen Material bestehen, insbesondere ITO, und wobei die zweiten leitfähigen Drähte (42) aus einem photosensitiven Material bestehen, welches eine elektrisch leitende Eigenschaft aufweist, wobei das photosensitive Material, wenn es der Atmosphäre ausgesetzt ist, stabiler gegenüber Oxidation ist, als das transparente leitfähige Material,
wobei das photosensitive Material, das die elektrisch leitfähige Eigenschaft hat, ein Photoresist ist, der mit Metallpartikeln oder Carbonpartikeln dotiert ist.

2. Kapazitives Touchpanel (20) nach Anspruch 1, bei dem die Metallteilchen eines oder mehrere der Metalle Gold, Silber, Kupfer, Eisen oder Aluminium, und eine beliebige Kombination derselben umfassen.

3. Kapazitives Touchpanel (20, 50) nach Anspruch 1 oder 2, bei dem die isolierende Schicht (32) aus einem transparenten isolierenden Material besteht.

4. Kapazitives Touchpanel (20) nach Anspruch 1, bei dem die Erfassungselektroden (28, 30) mit periphären Schaltungen (40) verbunden sind,
wobei die periphären Schaltungen (40) aus dem photosensitiven Material, welches eine elektrisch leitende Eigenschaft hat, bestehen, wobei die periphären Schaltungen (40) dazu konfiguriert sind, eine Kapazitätsänderung, die durch die ersten Erfassungselektroden (28) und die zweiten Erfassungselektroden (30) in Folge einer Berührung erzeugt wird, an eine Steuerschaltung zu übertragen.

5. Verfahren zum Herstellen eines kapazitiven Touchpanels (20), das die folgenden Schritte umfasst:
gleichzeitiges Anordnen erster leitfähiger Einheiten (22), zweiter leitfähiger Einheiten (24) und erster leitfähiger Drähte (26) auf einem Substrat;
wobei die ersten und die zweiten leitfähigen Einheiten (22, 24) und die ersten leitfähigen Drähte (26) aus einem transparenten leitfähigen Material bestehen, insbesondere aus ITO, und wobei die ersten leitfähigen Drähte (26) die ersten leitfähigen Einheiten (22) verbinden, um die ersten Erfassungselektroden (28) zu bilden, die in einer ersten axialen Richtung angeordnet sind,
Anordnen eines isolierenden Films (32) mit einer Mehrzahl von Öffnungen (34) auf den Oberflächen der ersten leitfähigen Einheiten (22), der zweiten leitfähigen Einheiten (24), und der ersten leitfähigen Drähte (26) derart, dass die Öffnungen (34) mit den zweiten leitfähigen Einheiten (24) ausgerichtet sind; und
Anordnen zweiter leitfähiger Drähte (42) auf der Oberfläche des isolierenden Films (32), wobei die zweiten leitfähigen Drähte (42) die zweiten leitfähigen Einheiten (24) verbinden, um zweite Erfassungselektroden (30) zu bilden, die in einer zweiten axialen Richtung angeordnet sind,
wobei die zweiten leitfähigen Drähte (42) aus einem photosensitiven Material bestehen, welches eine elektrisch leitende Eigenschaft hat, wobei das photosensitive Material, wenn es der Atmosphäre ausgesetzt ist, chemisch stabiler gegenüber einer Oxidation ist als das transparente leitfähige Material,
wobei das photosensitive Material, welches eine elektrisch leitende Eigenschaft hat, durch einen Photoresist gebildet wird, der mit Metallteilchen oder Carbonteilchen dotiert ist.

6. Verfahren nach Anspruch 5, bei dem die Metallteilchen eines oder mehrere der Metalle Gold, Silber, Kupfer, Eisen oder Aluminium, oder eine beliebige Kombination derselben umfasst.

7. Verfahren zum Herstellen eines kapazitiven Touchpanels (20) nach Anspruch 5, das ferner einen Schritt umfasst, in dem periphäre Schaltungen (40) angeordnet werden, die mit den Erfassungselektroden (28, 30) verbunden sind, wobei die periphären Schaltungen (40) dazu konfiguriert sind, eine Kapazitätsänderung, die durch die ersten Erfassungselektroden (28) und die zweiten Erfassungselektroden (30) in Folge einer Berührung erzeugt wird, an eine Steuerschaltung zu übertragen, wobei die periphären Schaltungen aus dem photosensitiven Material, welches eine elektrisch leitende Eigenschaft hat, bestehen,
wobei der Schritt des Anordnens der periphären Schaltungen (40) und der Schritt des Anordnens der leitfähigen Drähte (42) gleichzeitig ausgeführt wird.

## Revendications

1. Panneau tactile capacitif (20), comprenant :
des électrodes de détection (28, 30) comprenant une pluralité d'unités conductrices (22, 24) et une pluralité de fils conducteurs (26, 42) pour connecter les unités conductrices (22, 24),
dans lequel les électrodes de détection comprennent des premières électrodes de détection (28) agencées dans une première direction axiale et des deuxièmes électrodes de détection (30) agencées dans une deuxième direction axiale,
dans lequel chacune des premières électrodes de détection (28) comprend une pluralité de premières unités conductrices (22) et une pluralité de premiers fils conducteurs (26) connectant les premières unités conductrices (22), et chacune des deuxièmes électrodes de détection (30) comprend une pluralité de deuxièmes unités conductrices (24) et une pluralité de deuxièmes fils conducteurs (42) connectant les deuxièmes unités conductrices (24),
dans lequel les premières unités conductrices (22), les deuxièmes unités conductrices (24), et les premiers fils conducteurs (26) sont prévus sur un côté arrière d'un film isolant (32) avec une pluralité d'ouvertures (34) alignées avec les deuxièmes unités conductrices (24), en outre dans lequel les deuxièmes fils conducteurs (42) sont prévus sur un côté avant du film isolant (32) et traversent la pluralité d'ouvertures (34) pour connecter les deuxièmes unités conductrices (24),
dans lequel les premières unités conductrices (22), les deuxièmes unités conductrices (24), et les premiers fils conducteurs (26) sont réalisés en un matériau conducteur transparent, en particulier de l'ITO, et les deuxièmes fils conducteurs (42) sont réalisés en un matériau photosensible ayant une propriété de conduction électrique, dans lequel le matériau photosensible est chimiquement plus stable vis-à-vis d'une oxydation lorsqu'il est exposé à l'atmosphère que le matériau conducteur transparent,
dans lequel le matériau photosensible ayant la propriété de conduction électrique est une résine photosensible dopée avec des particules métalliques ou des particules de carbone.

2. Panneau tactile capacitif (20) selon la revendication 1, dans lequel les particules métalliques comprennent un ou plusieurs de l'or, de l'argent, du cuivre, du fer ou de l'aluminium, et n'importe quelles combinaisons de ceux-ci.

3. Panneau tactile capacitif (20, 50) selon la revendication 1 ou 2, dans lequel la couche isolante (32) est réalisée en un matériau isolant transparent.

4. Panneau tactile capacitif (20) selon la revendication 1, dans lequel les électrodes de détection (28, 30) sont connectées à des circuits périphériques (40),
dans lequel les circuits périphériques (40) sont réalisés en le matériau photosensible ayant une propriété de conduction électrique, lesdits circuits périphériques (40) étant configurés pour transmettre un changement capacitif produit par l'intermédiaire des premières électrodes de détection (28) et des deuxièmes électrodes de détection (30) du fait d'un contact à un circuit de commande.

5. Procédé de fabrication d'un panneau tactile capacitif (20), comprenant les étapes suivantes :
la disposition simultanément des premières unités conductrices (22), des deuxièmes unités conductrices (24), et des premiers fils conducteurs (26) sur un substrat ;
dans lequel lesdites premières et deuxièmes unités conductrices (22, 24) et lesdits premiers fils conducteurs (26) sont réalisés à partir d'un matériau conducteur transparent, en particulier de l'ITO, et dans lequel lesdits premiers fils conducteurs (26) sont connectés aux premières unités conductrices (22) pour former des premières électrodes de détection (28) agencées dans une première direction axiale,
la disposition d'un film isolant (32) comportant une pluralité d'ouvertures (34) sur les surfaces des premières unités conductrices (22), des deuxièmes unités conductrices (24), et des premiers fils conducteurs (26) de sorte que les ouvertures (34) soient alignées avec les deuxièmes unités conductrices (24) ; et
la disposition de deuxièmes fils conducteurs (42) sur la surface du film isolant (32), lesdits deuxièmes fils conducteurs (42) connectant lesdites deuxièmes unités conductrices (24) pour former des deuxièmes électrodes de détection (30) agencées dans une deuxième direction axiale,
dans lequel les deuxièmes fils conducteurs (42) sont réalisés en un matériau photosensible ayant une propriété de conduction électrique, dans lequel le matériau photosensible est chimiquement plus stable vis-à-vis d'une oxydation lorsqu'il est exposé à l'atmosphère que le matériau conducteur transparent,
dans lequel le matériau photosensible ayant une propriété de conduction électrique est une résine photosensible dopée avec des particules métalliques ou des particules de carbone.

6. Procédé selon la revendication 5, dans lequel les particules métalliques comprennent un ou plusieurs de l'or, de l'argent, du cuivre, du fer ou de l'aluminium, et n'importe quelles combinaisons de ceux-ci.

7. Procédé de fabrication d'un panneau tactile capacitif (20) selon la revendication 5, comprenant en outre l'étape de disposition de circuits périphériques (40) connectés aux électrodes de détection (28, 30), lesdits circuits périphériques (40) étant configurés pour transmettre un changement capacitif produit par l'intermédiaire des premières électrodes de détection (28) et des deuxièmes électrodes de détection (30) du fait d'un contact à un circuit de commande, dans lequel lesdits circuits périphériques sont réalisés en ledit matériau photosensible ayant une propriété de conduction électrique,
dans lequel l'étape de disposition des circuits périphériques (40) et l'étape de dispositif des fils conducteurs (42) sont effectuées simultanément.
